# EUROPEAN PATENT APPLICATION

(11) **EP 4 318 747 A1**
(43) Date of publication of application: **07.02.2024**
(21) Application number: 21933886.0
(22) Date of filing: 31.03.2021
(51) Int. Cl.: H01M 50/109

(54) **BATTERY AND ELECTRONIC DEVICE**

(71) Applicant: Ningde Amperex Technology Ltd., Ningde, Fujian 352106 (CN)
(72) Inventor: YAN, Dongyang, Ningde, Fujian 352106 (CN); ZENG, Qiao, Ningde, Fujian 352106 (CN); YANG, Hongzhan, Ningde, Fujian 352106 (CN)
(74) Representative: Klunker IP Patentanwälte PartG mbB
(86) International application number: PCT/CN2021/084749
(87) International publication number: WO 2022/205225

(57) **Abstract**

This application provides a battery, including a first conductive part, an electrode assembly, a second conductive part, and a first layer. The first conductive part includes a concave part and a cover part, where the concave part is connected to the cover part, and the concave part includes a first wall and a first side wall connected to the first wall. The electrode assembly is electrically connected to the first conductive part, and configured inside the concave part. The second conductive part is electrically connected to the electrode assembly, where observed in a first direction, the second conductive part and the electrode assembly partly overlap, the second conductive part is located in the first conductive part, the second conductive part includes a First surfaceand a second surface, and the second surface faces away from the first conductive part. The first layer includes a part located between the first conductive part and the second conductive part, where the part is disposed on the first face, and the first layer includes an insulating material. This application further relates to an electronic apparatus. With the battery used, the electronic apparatus occupies a small space, uses fewer parts and is easy to manufacture.

## Description

### TECHNICAL FIELD

This application relates to the field of battery manufacturing technologies, and in particular, to a battery and an electronic apparatus.

### BACKGROUND

For existing button batteries, for example, button cells, substances such as insulating glue are used to bond housings of positive and negative electrodes, implementing both insulation and sealing. With an arrangement path and space of the glue type substances increased to improve airtightness of the button batteries, volumetric energy density of the batteries is decreased.

### SUMMARY

In view of this, it is necessary to provide a battery and an electronic apparatus, to improve airtightness of the battery while maintaining volumetric energy density.

An embodiment of this application provides a battery, including a first conductive part, an electrode assembly, a second conductive part, and a first layer. The first conductive part includes a concave part and a cover part, where the concave part is connected to the cover part, and the concave part includes a first wall and a first side wall connected to the first wall. The electrode assembly is electrically connected to the first conductive part, and configured inside the concave part. The second conductive part is electrically connected to the electrode assembly, where observed in a first direction, the second conductive part and the electrode assembly partly overlap, the second conductive part is located in the first conductive part, the second conductive part includes a First surfaceand a second surface, and the second surface faces away from the first conductive part. The first layer includes a part located between the first conductive part and the second conductive part and connected to the first face, where the first layer includes an insulating material.

According to the battery, the first layer is disposed between the first conductive part and the second conductive part, so as to perform sealing between the first conductive part and the second conductive part, thereby preventing liquid, for example, water vapor, from entering the battery from a gap between the first conductive part and the second conductive part. The first layer including the insulating material may mitigate short circuit of the battery caused by electrical connection between the first conductive part and the second conductive part. Also, the first layer disposed between the first conductive part and the second conductive part improves airtightness of the battery while maintaining volumetric energy density of the battery.

In a possible implementation, the cover part is provided with an opening part, and the second conductive part includes a first part and a second part protruding out of the first part, where observed in the first direction, a projection of the second part at least partly overlaps the opening part.

In a possible implementation, observed in a second direction, the second part is disposed away from the opening part, where the second direction is perpendicular to the first direction.

In a possible implementation, the first layer is connected to the second part.

In a possible implementation, the first layer is disposed away from the second part.

In a possible implementation, observed in the first direction, the first layer surrounds the second part.

In a possible implementation, the second part is provided with a Third surface away from the first part, and the first layer is connected to the Third surface.

In a possible implementation, the second part is provided with a Third surface away from the first part, and the first layer is disposed away from the Third surface.

In a possible implementation, the first part is located outside the concave part.

In a possible implementation, the cover part includes a second wall that encloses the opening part, where the first layer is connected to the second wall.

In a possible implementation, the cover part includes a Fourth surface opposite the first wall, where the first layer is connected to the Fourth surface.

In a possible implementation, the first layer is disposed away from the electrode assembly.

In a possible implementation, the first layer is connected to the electrode assembly.

In a possible implementation, the cover part includes a second wall, where the cover part is provided with an opening part, the opening part is enclosed by the second wall, and the first layer is connected to the second wall.

In a possible implementation, the cover part includes a Fourth surface opposite the first wall, where the first layer is connected to the Fourth surface.

In a possible implementation, observed in the first direction, the first layer includes a first zone overlapping the second conductive part and a second zone away from the second conductive part.

In a possible implementation, the battery further includes a second layer, where the second layer includes an insulating material, and the second layer is disposed between the electrode assembly and the cover part.

In a possible implementation, the electrode assembly includes a first electrode plate and a first metal part connected to the first electrode plate and the second conductive part; the second conductive part and the first metal part include a same metal element; and the first electrode plate is a positive electrode plate, and the same metal element includes aluminum and/or manganese.

In a possible implementation, the electrode assembly includes a first electrode plate and a first metal part connected to the first electrode plate and the second conductive part, where the first metal part is connected to the second part.

In a possible implementation, the electrode assembly comprises a second electrode plate and a second metal part connected to the second electrode plate and the first conductive part; the first conductive part and the second metal part include a same metal element; and the second electrode plate is a negative electrode plate, and the same metal element includes at least one of iron, chromium, manganese, nickel, or molybdenum.

In a possible implementation, the cover part is located outside the concave part.

In a possible implementation, observed in the first direction, has a projection with an area of the second conductive part being A1 and an overlapping area of the projection of the second conductive part and a projection of the cover part being A2 satisfy 1/5A1 ≤ A2 ≤ 4/5A1.

In a possible implementation, observed in the first direction, the first layer is disposed away from the opening part.

In a possible implementation, observed in the first direction, the first layer is disposed away from an outer edge of the cover part.

In a possible implementation, the second conductive part comprises a first part and a second part protruding out of the first part, where the second part is connected to the electrode assembly through the opening part.

In a possible implementation, observed in the first direction, the second part includes a second side wall and a First top surfaceenclosed by the second side wall, where the second side wall inclines in the first direction.

In a possible implementation, an included angle between the second side wall and the First top surfaceis an obtuse angle.

In a possible implementation, the electrode assembly includes a first metal part, where the first metal part is connected to the second conductive part through the opening part.

In a possible implementation, the second conductive part includes a first part and a second part protruding out of the first part, where observed in the first direction, the second part includes a second side wall and a First top surfaceenclosed by the second side wall, where the second side wall inclines in the first direction.

In a possible implementation, an included angle between the second side wall and the First top surfaceis an obtuse angle.

In a possible implementation, the battery further includes a second layer, where the second layer includes an insulating material, and the second layer is disposed between the electrode assembly and the cover part.

In a possible implementation, the electrode assembly further includes a second metal part connected to the first wall.

In a possible implementation, the electrode assembly further includes a second metal part connected to the first side wall.

In a possible implementation, the electrode assembly includes a first electrode layer, a second electrode layer, and a third layer; the first electrode layer includes a first current collector and a first active substance formed on the first current collector; the second electrode layer includes a second current collector and a second active substance formed on the second current collector; and the third layer is disposed between the first electrode layer and the second electrode layer, and the third layer is insulative.

In a possible implementation, the first current collector includes a third zone exposed from the First active layer, where the second conductive part is connected to the first electrode layer through the third zone.

In a possible implementation, the first electrode layer further includes a first metal part connected to the first current collector, where the second conductive part is connected to the first metal part through the third zone.

In a possible implementation, the second current collector includes a fourth zone exposed from the second active layer, and the second electrode layer further includes a second metal part connected to the second current collector, where the second metal part is connected to the first wall through the fourth zone.

In a possible implementation, the second metal part is connected to the first side wall.

An embodiment of this application further provides an electronic apparatus. The electronic apparatus includes the battery in any one of the foregoing implementations.

For the battery and the electronic apparatus provided in this application, the first layer disposed between the first conductive part and the second conductive part may have a sealing effect on the battery and maintain original volumetric energy density of the battery.

### BRIEF DESCRIPTION OF DRAWINGS

FIG. 1 is a schematic three-dimensional structural diagram of a battery according to a first embodiment of this application.
FIG. 2 is a schematic top view of the battery shown in FIG. 1.
FIG. 3 is a schematic cross-sectional view of the battery shown in FIG. 2 in a direction A-A.
FIG. 4 is a schematic cross-sectional view of the battery shown in FIG. 2 in a direction A-A according to another embodiment.
FIG. 5 is a schematic cross-sectional view of the battery shown in FIG. 2 in a direction A-A according to still another embodiment.
FIG. 6 shows a structure with reverse opposite to that of an electrode assembly in the battery shown in FIG. 3.
FIG. 7 is a schematic exploded view of the battery shown in FIG. 1.
FIG. 8 is a schematic bottom view of a second conductive part, a first layer, and a cover part of a first conductive part in FIG. 7 after assembly.
FIG. 9 illustrates a connection relationship of a first electrode plate, a first metal part, and a second conductive part on the basis of FIG. 2.
FIG. 10 illustrates a connection relationship of a first electrode plate and a first metal part on the basis of FIG. 2.
FIG. 11 illustrates a connection relationship of a second electrode plate, a second metal part, and a first conductive part from a direction opposite the direction of FIG. 2.
FIG. 12 illustrates a connection relationship of a second electrode plate and a second metal part from a direction opposite the direction of FIG. 2.
FIG. 13 is a schematic cross-sectional view of a battery according to a second embodiment.
FIG. 14 is a schematic bottom view of a second conductive part, a first layer, and a cover part of a first conductive part in FIG. 13 after assembly.
FIG. 15 is a schematic cross-sectional view of a battery according to a third embodiment.
FIG. 16 is a schematic bottom view of a second conductive part, a first layer, and a cover part of a first conductive part in FIG. 15 after assembly.
FIG. 17 is a schematic cross-sectional view of a battery according to a fourth embodiment.
FIG. 18 is a schematic cross-sectional view of a battery according to a fifth embodiment.
FIG. 19 is a schematic bottom view of a second conductive part, a first layer, and a cover part of a first conductive part in FIG. 18 after assembly.
FIG. 20 is a schematic cross-sectional view of a battery according to a sixth embodiment.
FIG. 21 is a schematic cross-sectional view of a battery according to a seventh embodiment.
FIG. 22 is a schematic cross-sectional view of a battery according to an eighth embodiment.
FIG. 23 is a schematic cross-sectional view of a battery according to a ninth embodiment.
FIG. 24 is a schematic bottom view of a second conductive part, a first layer, and a cover part of a first conductive part in FIG. 23 after assembly.
FIG. 25 is a schematic cross-sectional view of a battery according to a tenth embodiment.
FIG. 26 is a schematic bottom view of a second conductive part, a first layer, and a cover part of a first conductive part in FIG. 25 after assembly.
FIG. 27 is a schematic three-dimensional structural diagram of a battery according to an eleventh embodiment.
FIG. 28 is a schematic top view of the battery shown in FIG. 27.
FIG. 29 is a schematic cross-sectional view of the battery shown in FIG. 28 in a direction B-B.
FIG. 30 is a schematic exploded view of the battery shown in FIG. 27.
FIG. 31 is a schematic bottom view of a second conductive part, a first layer, and a cover part of a first conductive part in FIG. 30 after assembly.
FIG. 32 illustrates a connection relationship of a first electrode plate, a first metal part, and a second conductive part on the basis of FIG. 28.
FIG. 33 illustrates a connection relationship of a first electrode plate and a first metal part on the basis of FIG. 28.
FIG. 34 illustrates a connection relationship of a second electrode plate, a second metal part, and a first conductive part on the basis of FIG. 28.
FIG. 35 illustrates a connection relationship of a second electrode plate and a second metal part on the basis of FIG. 28.
FIG. 36 is a schematic cross-sectional view of a battery according to a twelfth embodiment.
FIG. 37 is a schematic cross-sectional view of a battery according to a thirteenth embodiment.
FIG. 38 is a schematic cross-sectional view of a battery according to a fourteenth embodiment.
FIG. 39 is a schematic cross-sectional view of a battery according to a fifteenth embodiment.
FIG. 40 is a schematic cross-sectional view of a battery according to a sixteenth embodiment.
FIG. 41 is a schematic bottom view of a battery provided with a quick response code and a mark according to a seventeenth embodiment.
FIG. 42 is a schematic bottom view of the battery in FIG. 41 provided with a quick response code and another mark.
FIG. 43 is a schematic bottom view of the battery in FIG. 41 provided with a quick response code and still another mark.
FIG. 44 is a schematic three-dimensional structural diagram of an electronic apparatus according to an eighteenth embodiment.

**Reference signs of main components**

| | |
|---|---|
| Battery | 100 |
| First conductive part | 10 |
| Concave part | 11 |
| First wall | 111 |
| First side wall | 112 |
| Cover part | 12 |
| Opening part | 121 |
| Second wall | 122 |
| Fourth surface | D |
| Fifth surface | E |
| Second conductive part | 20 |
| First part | 21 |
| Second part | 22 |
| Second side wall | 221 |
| First top surface | 222 |
| First surface | A |
| Second surface | B |
| Third surface | C |
| Electrode assembly | 30 |
| First electrode sheet | 31 |
| First metal part | 311, 334 |
| Second electrode sheet | 32 |
| Second metal part | 321, 344 |
| First electrode layer | 33 |
| First current collector | 331 |
| First active layer | 332 |
| Third zone | 333 |
| Second electrode layer | 34 |
| Second current collector | 341 |
| Second active layer | 342 |
| Fourth zone | 343 |
| Third layer | 35 |
| First layer | 40 |
| First zone | 41 |
| Second zone | 42 |
| Second layer | 50 |
| Quick response code | 60 |
| Mark | 70 |
| Third part | 80 |
| Opening | 81 |
| Center | O |
| Electronic apparatus | 200 |
| Body | 90 |

### DESCRIPTION OF EMBODIMENTS

The following clearly and detailed describes the technical solutions in the embodiments of this application. Apparently, the described embodiments are only some rather than all of the embodiments of this application. Unless otherwise defined, all technical and scientific terms used herein shall have the same meanings as commonly understood by those skilled in the art to which this application belongs. The terms used in the specification of this application are merely intended to describe specific embodiments but not intended to constitute any limitation on this application.

The following describes the embodiments of this application in detail. However, this application may be embodied in many different forms, and should not be construed as being limited to the example embodiments explained herein. Rather, these example embodiments are provided so that this application may be conveyed to those skilled in the art in a thorough and detailed manner.

In addition, for brevity and clarity, in the accompanying drawings, sizes or thicknesses of various components and layers may be magnified. Throughout the text, the same numerical values represent the same elements. As used herein, the term "and/or" includes any and all combinations of one or more related listed items. In addition, it should be understood that when an element A is referred to as "connecting" an element B, the element A may be directly connected to the element B, or there may be an intermediate element C and the element A and the element B may be indirectly connected to each other.

Further, the use of "may" when describing the embodiments of this application refers to "one or more embodiments of this application".

The terminology used herein is for the purpose of describing specific embodiments and is not intended to limit this application. As used herein, singular forms are intended to also include plural forms, unless the context clearly specifies otherwise. It should be further understood that the term "including", when used in this specification, refers to the presence of the described features, values, steps, operations, elements, and/or components, but does not exclude the presence or addition of one or more other features, values, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that in addition to the directions described in the figures, the spatial related terms are intended to include different directions in the use or operation of devices or apparatus. For example, if a device in the figure is turned over, an element described as "on" or "above" another element or feature should be oriented "below" or "under" the another element or feature. Therefore, the example term "above" may include directions of above and below. It should be understood that although the terms first, second, third, or the like may be used herein to describe various elements, components, zones, layers, and/or portions, these elements, components, zones, layers, and/or portions should not be limited by these terms. These terms are used to distinguish one element, component, zone, layer, or portion from another element, component, zone, layer, or portion. Therefore, the first element, component, zone, layer, or portion discussed below may be referred to as the second element, component, zone, layer, or portion without departing from the teachings of the example embodiments.

An embodiment of this application provides a battery, including a first conductive part, an electrode assembly, a second conductive part, and a first layer. The first conductive part includes a concave part and a cover part, where the concave part is connected to the cover part, and the concave part includes a first wall and a first side wall connected to the first wall. The electrode assembly is electrically connected to the first conductive part, and configured inside the concave part. The second conductive part is electrically connected to the electrode assembly, where observed in a first direction, the second conductive part and the electrode assembly partly overlap, the second conductive part is located in the first conductive part, the second conductive part includes a First surfaceand a second surface, and the second surface faces away from the first conductive part. The first layer includes a part located between the first conductive part and the second conductive part and connected to the first face, where the first layer includes an insulating material.

According to the battery, the first layer is disposed between the first conductive part and the second conductive part, so as to perform sealing between the first conductive part and the second conductive part, thereby preventing liquid, for example, water vapor, from decreasing the battery from a gap between the first conductive part and the second conductive part. The first layer including the insulating material may mitigate short circuit of the battery caused by electrical connection between the first conductive part and the second conductive part. Also, the first layer disposed between the first conductive part and the second conductive part may improve airtightness of the battery while maintaining volumetric energy density of the battery.

An embodiment of this application further provides an electronic apparatus. The electronic apparatus includes the foregoing battery. The battery is used to provide power to the electronic apparatus, such that the electronic apparatus may operate. The battery may improve airtightness in addition to maintaining original volumetric energy density, such that with the battery used, the electronic apparatus has higher safety performance.

The following describes some embodiments with reference to the accompanying drawings. In absence of conflicts, the following embodiments and features in the embodiments may be combined.

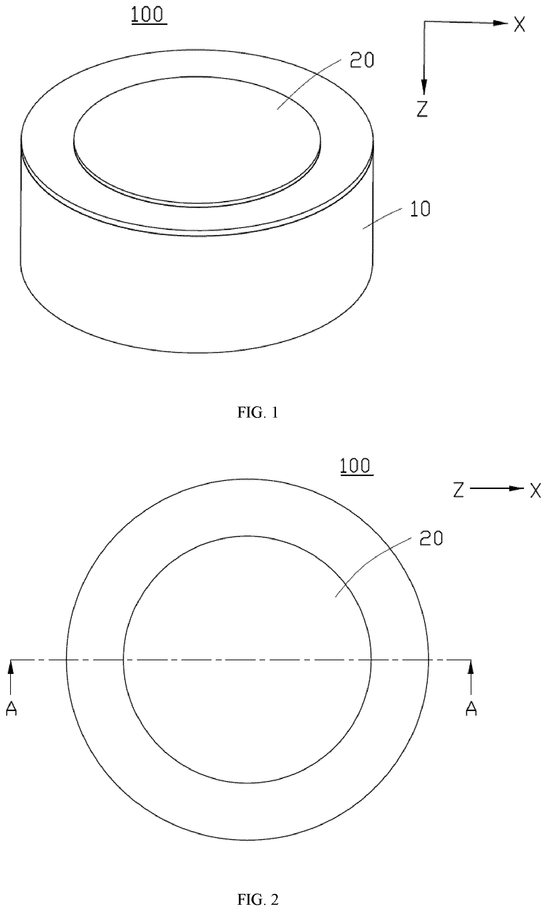

Referring to FIG. 1, FIG. 2 and FIG. 3, a first embodiment of this application provides a battery 100, including a first conductive part 10, a second conductive part 20, an electrode assembly 30, and a first layer 40. In an embodiment, a preparation material of the first layer 40 includes high polymer. In an embodiment, the high polymer includes at least one of polyethylene terephthalate (Polyethylene terephthalate, PET), polyimide (Polyimide, PI), polypropylene (polypropylene, PP), polyethylene (polyethylene, PE), or silicone rubber (Silicone rubber).

The electrode assembly 30 is disposed in the first conductive part 10, and electrically connected to the first conductive part 10. The second conductive part 20 is electrically connected to the electrode assembly 30. The first conductive part 10 and the second conductive part 20 jointly accommodate the electrode assembly 30, such that the electrode assembly 30 is accommodated in the battery 100, to protect the electrode assembly 30. The first layer 40 includes a part disposed between the first conductive part 10 and the second conductive part 20. Such part of the first layer 40 is configured to seal a joint of the first conductive part 10 and the second conductive part 20. With such part of the first layer 40 may be used to perform sealing for the first conductive part 10 and the second conductive part 20, original volumetric energy density of the battery 100 may be still maintained.

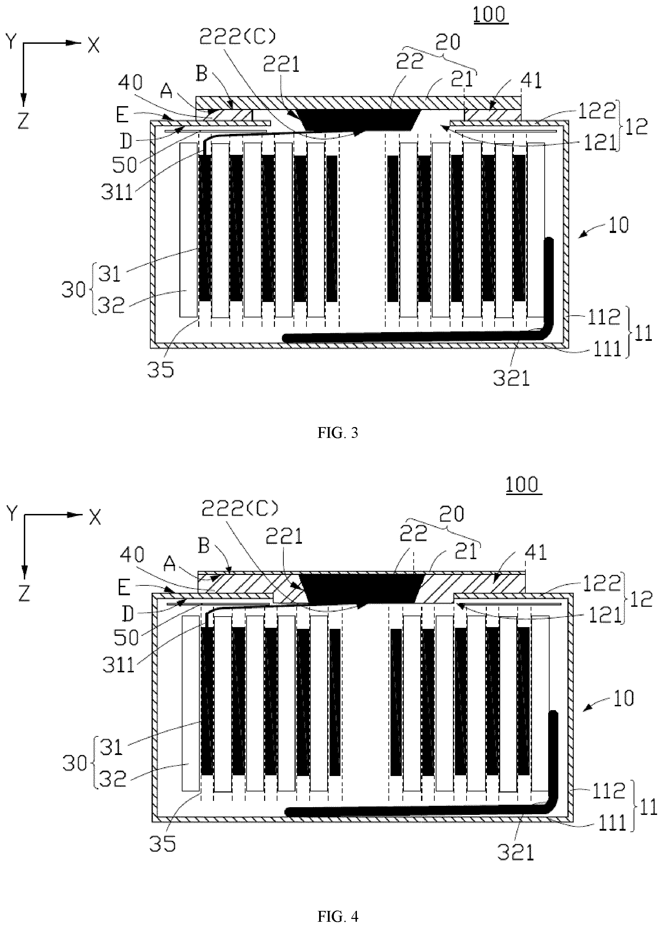

Referring to FIG. 3, FIG. 4 and FIG. 7, the first conductive part 10 includes a concave part 11 and a cover part 12, where the concave part 11 is connected to the cover part 12. The concave part 11 and the cover part 12 are lined in the first direction which is shown in figs as direction Z. A second direction is shown in figs as X direction. In some embodiments, the concave part 11 is adapted to the electrode assembly 30, so as to reduce an occupied space required by the concave part 11 and increase space utilization of the battery 100.

It may be understood that in other embodiments, a cross-section shape of the concave part 11 is not limited and may also be replaced with other shapes depending on specific needs.

The concave part 11 includes a first wall 111 and a first side wall 112 connected to the first wall 111. The first wall 111 is extended to the direction X, and The first side wall is extended to the direction Z. and the first wall 111 is substantially perpendicular to the first side wall 112, where "substantially perpendicular" should be understood as including a case that an included angle exists between the first wall 111 and the first side wall 112, ranging from ± 5 degrees to ± 10 degrees, and a case that the first wall 111 is absolutely perpendicular to the first side wall 112. The electrode assembly 30 is disposed in a space enclosed by the first wall 111 and the first side wall 112. Further, the electrode assembly 30 is disposed in a space enclosed by the first wall 111, the first side wall 112, the second conductive part 20, and the first layer 40.

The cover part 12 is connected to an end of the first side wall 112 and is extended to the direction X perpendicular to the first side wall 112. The cover part 12 and the first wall 111 partly overlap, such that the cover part 12 may cover at least a part of the electrode assembly 30.

The cover part 12 is located outside the concave part 11, and includes a second wall 122 and an opening part 121, where the second wall 122 is connected to the end of the first side wall 112 and extended to direction X which is perpendicular to direction Z which the first side wall 112 is extended. The opening part 121 is enclosed by the second wall 122, and the opening part 121 may be located at a center position of the second wall 122, so as to facilitate arrangement of the second conductive part 20 and connection between the second conductive part 20 and the electrode assembly 30.

The cover part 12 further includes a Fourth surface D, the Fourth surface D faces to the first wall 111 in the direction Z. Specifically, the Fourth surface D is a face of the second wall 122 opposite to the first wall 111, and the Fourth surface D is closer to the electrode assembly 30 than the first layer 40.

It may be understood that in other embodiments, the opening part 121 is not limited thereto in position, for example, may alternatively be disposed at a position of the second wall 122 close to a second side wall 221.

In an embodiment, the concave part 11 and the cover part 12 may be of an integral structure, such that the first conductive part 10 may be easier to manufacture. It may be understood that in other embodiments, the concave part 11 and the cover part 12 may alternatively be changed to interconnected separate structures. Specifically, in actual scenarios, a thickness of the first part 21 in direction Z is greater than a thickness of the first layer 40 (For details, reference may be made to FIG. 3). However, in some scenarios, to make the battery 100 more applicable, the thickness of the first part 21 in the Z direction may alternatively be equal to or less than the thickness of the first layer 40.

Referring to FIG. 3, FIG. 4 and FIG. 7, for better illustration of a structure of the battery 100, an X coordinate axis, a Y coordinate axis and a Z coordinate axis are used to describe the structure, where the X coordinate axis, the Y coordinate axis and the Z coordinate axis are perpendicular to each other. Observed in the first direction, the second conductive part 20 and the electrode assembly 30 partly overlap, and the second conductive part 20 is located in the first conductive part 10. The first direction is a Direction Z. When the battery 100 is observed in the Direction Z, the second conductive part 20 and the electrode assembly 30 partly overlap, such that the second conductive part 20 may cover part of the electrode assembly 30. Also, when the battery 100 is observed in the Direction Z, a projection of the second conductive part 20 is located in the first conductive part 10. That is, observed in the Direction Z, an area of the second conductive part 20 is smaller than an area of the first conductive part 10.

In some embodiments, observed in the Direction Z, the second conductive part 20 has a projection with an area of A1, and the second conductive part 20 and the cover part 12 have an overlapping projection with an area of A2. A1 and A2 satisfying 1/5A1 ≤ A2 ≤ 4/5A1 may further improve volumetric energy density of the battery 100.

The second conductive part 20 includes a first part 21 and a second part 22 protruding out of the first part 21, the first part 21 is of a flaky or platy structure, and is parallel to the cover part 12, parallel means that a tiny included angle exists between the first part 21 and the cover part 12, for example, an included angle in a range of ± 5 degrees. In this embodiment, the first part 21 is located outside the concave part 11. Further, the first part 21 includes a First surfaceA and a second surface B, where the First surfaceA is a face that faces toward the first conductive part 10, and the second surface B is a face that faces away from the first conductive part 10. The second part 22 protrudes out of the First surfaceA toward the first conductive part 10.

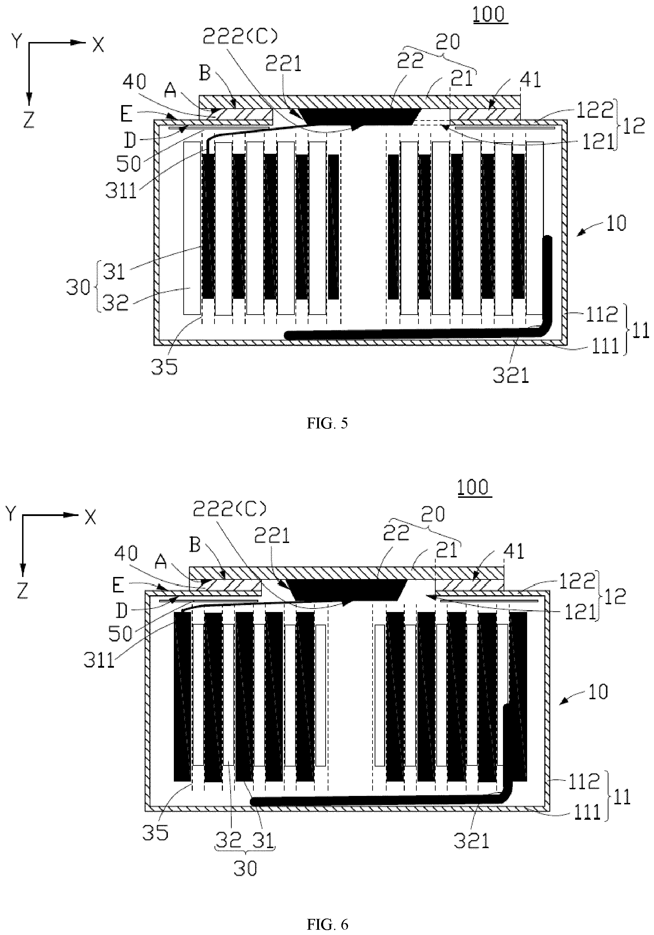

Referring to FIG. 5, observed in the Direction Z, the second conductive part 20 is connected to the electrode assembly 30 through the opening part 121. Further, the second conductive part 20 is located outside the concave part 11. Moreover, the second conductive part 20 is disposed away from the opening part 121. A projection of the second part 22 at least partly overlaps the opening part 121 viewed from the direction X, and the second part 22 is located in the opening part 121 viewed from the Z direction. After the first conductive part 10 and the second conductive part 20 are assembled, the second part 22 protruding into the first conductive part 10 from the opening part 121 may be connected to the electrode assembly 30 disposed in the first conductive part 10. The second part 22 includes a Third surface C, where the Third surface C is distant from the first part 21, that is, in the Direction Z, the Third surface C is a lower end face of the second part 22 in fig 5, and the Third surface C faces toward the electrode assembly 30. In an embodiment, the second part 22 includes a second side wall 221 and a First top surface222 enclosed by the second side wall 221. Further, the First top surface222 is equivalent to the Third surface C, the second side wall 221 is a side surface connected to the First surfaceA and the Third surface C, and the side surface is an inclined face. Further, the side surface inclines from the First surfaceA toward the Third surface C, such that the second part 22 is of a big-end-down structure. It may be understood that in other embodiments, the second side wall 221 may alternatively be a vertical surface.

In some embodiments, the second part 22 is a pole, where the pole is of a cylinder structure, and observed in the Direction Z, the First top surface222 is perpendicular to the second side wall 221. For example, in another embodiment, the second side wall 221 inclines in the Direction Z, an included angle between the second side wall 221 and the First top surface222 is an obtuse angle, and the second part 22 is of a circular truncated cone-shaped structure, so as to increase an extension path of the first layer 40 during arrangement of the first layer 40 and improve airtightness of the battery 100.

It may be understood that in other embodiments, the second part 22 may also be changed to other structures with equivalent functions or effects.

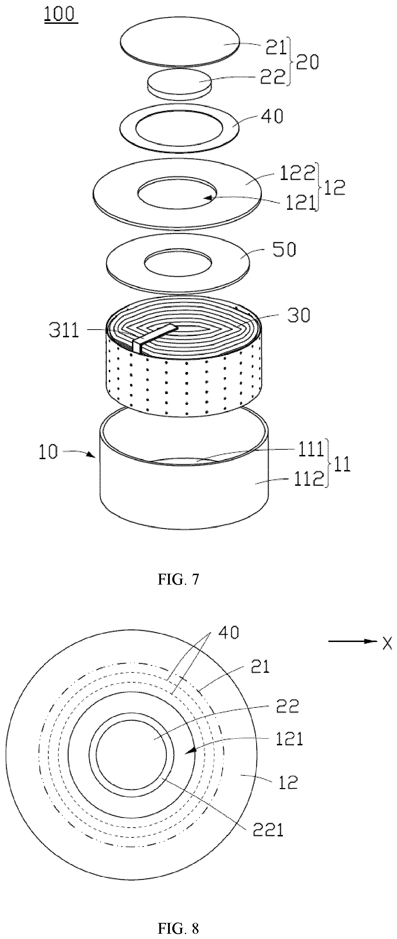

Referring to FIG. 8, FIG. 8 is a schematic bottom view of the cover part 12 of the first conductive part 10, the first layer 40, and the second conductive part 20 in FIG. 5 after assembly. The cover part 12 covers the first layer 40 and part of the second conductive part 20, and the second part 22 of the second conductive part 20 is located at a position of the opening part 121 viewed from the direction Z. With a projection of the opening part 121 larger than a projection of the second part 22, the first part 21 of the second conductive part 20 is exposed. In this figure, with the first layer 40 not connected to the second part 22, the battery 100 has good exhaust performance.

Referring to FIG. 3 and FIG. 7, the electrode assembly 30 is disposed in the first conductive part 10, and connected to both the first conductive part 10 and the second conductive part 20. The electrode assembly 30 includes a first electrode plate 31, a second electrode plate 32, and a third layer 35, where the first electrode plate 31, the second electrode plate 32, and the third layer 35 are stacked and wound. Specifically, the first electrode plate 31, the second electrode plate 32, and the third layer 35 are stacked, and then the stacked first electrode plate 31, second electrode plate 32, and third layer 35 are wound to form a winding structure. The electrode assembly 30 further includes a first metal part 311 and a second metal part 321, where the first metal part 311 is connected to both the first electrode plate 31 and the second conductive part 20, and further, the first metal part 311 is connected to the second part 22 of the second conductive part 20. The second metal part 321 is respectively connected to the second electrode plate 32 and the first conductive part 10, and further, the second metal part 321 is connected to the first wall 111 of the first conductive part 10. In this embodiment, the first wall 111 is made of a conductive material, such that the first wall 111 may be electrically connected to an external electric apparatus when the electrode assembly 30 is connected to the first conductive part 10. The first side wall 112 may be made of a conductive material. The second metal part 321 extends in an direction X beyond a center of the electrode assembly 30, and also extends in the direction X beyond the second part 22. Increasing an extension distance of the second metal part 321 may increase a contact area between the second metal part 22 and the concave part 11, and improve stability of connection in between.

In an embodiment, the second metal part 321 may alternatively be connected to the first side wall 112 of the first conductive part 10. In this embodiment, the first side wall 112 is made of a conductive material, such that the first side wall 112 may be electrically connected to an external electric apparatus when the electrode assembly 30 is connected to the first conductive part 10. The first wall 111 may be made of a conductive material.

The first electrode plate 31 is a positive electrode sheet, and the second electrode plate 32 is a negative electrode sheet. The first metal part 311 and the second conductive part 20 include a same metal element. When the first metal part 311 is connected to the second part 22 of the second conductive part 20, the first metal part 311 and the second part 22 include a same metal element, where the same metal element is, for example, aluminum and/or manganese. The second metal part 321 and the first conductive part 10 include a same metal element. When the second metal part 321 is connected to the first wall 111 of the first conductive part 10, the first metal part 311 and the first wall 111 include a same metal element, where the same metal element includes, for example, at least one of iron, chromium, manganese, nickel, or molybdenum.

The first electrode plate 31 includes a metal sheet and a conductive material layer applied on the metal sheet. Further, the conductive material layer may be an active substance layer. The metal sheet may be a current collector, and a material that may be used as a current collector. The active substance layer includes at least one of lithium cobaltate, lithium manganate, lithium iron phosphate, lithium iron manganese phosphate, lithium nickel cobalt manganate, lithium nickel cobalt aluminate, or lithium nickel manganate, and the positive electrode active material may undergo doping and/or coating processing.

Further, the third layer 35 that includes an insulating substance is disposed between the first electrode plate 31 and the second electrode plate 32, and the third layer 35 for separating the first electrode plate 31 from the second electrode plate 32 prevents the battery 100 from short-circuiting caused by contact between the first electrode plate 31 and the second electrode plate 32. In an embodiment, the third layer 35 is a separator, and the separator includes at least one of polypropylene and polyethylene materials.

In some embodiments, the first metal part 311 is connected to the second part 22 through the opening part 121. With the second part 22 located in the opening part 121, an end of the first metal part 311 extends to the opening part 121 and is connected to the second part 22, such that the electrode assembly 30 is electrically connected to the second conductive part 20.

In some embodiments, The first metal part 311 is a positive tab, the second metal part 321 is a negative tab, and the electrode assembly 30 is electrically connected to the first conductive part 10 and the second conductive part 20 through the tabs.

Referring to FIG. 6, it may be understood that in other embodiments, the first electrode plate 31 may alternatively be a negative electrode plate, and the second electrode plate 32 may be a positive electrode plate. Metal materials that the first metal part 311 and the second metal part 321 include are not limited herein.

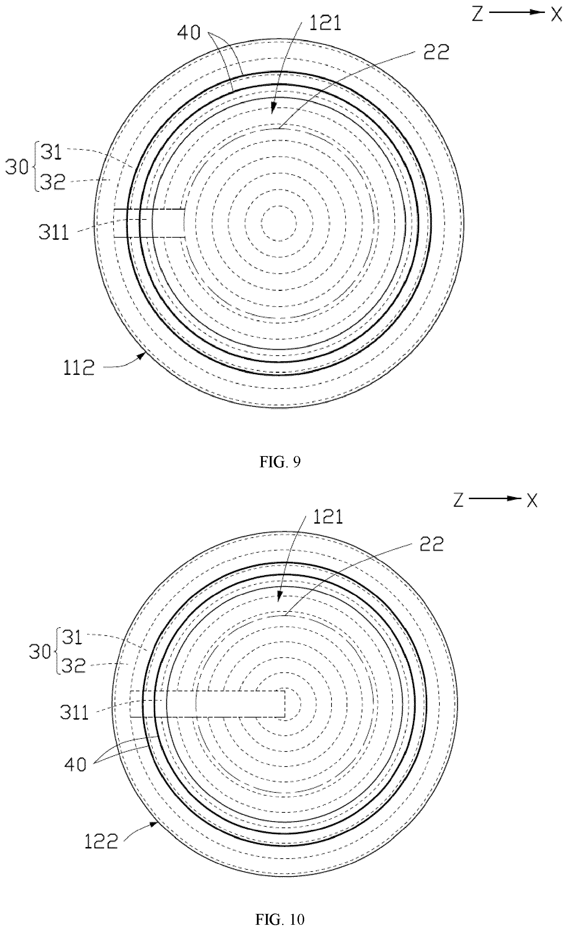

Referring to FIG. 9, FIG. 9 illustrates a connection relationship of a first electrode plate 31, a first metal part 311, and a second conductive part 20 on the basis of the angle of FIG. 2, where the first electrode plate 31 and the second electrode plate 32 are represented by dashed lines, the first metal part 311 is represented by a chain double dashed line, and the second part 22 is represented by a fine two-dash line. One end of the first metal part 311 is connected to the first electrode plate 31, and the first metal part 311 is bent and extends and is then connected to the second part 22 of the second conductive part 20. In addition, observed from a top view, the second part 22 covers part of the first metal part 311.

Referring to FIG. 10, FIG. 10 illustrates a connection relationship of a first electrode plate 31 and a first metal part 311 on the basis of the angle of FIG. 2, where the first electrode plate 31 and the second electrode plate 32 are represented by dashed lines, and the first metal part 311 is represented by a chain double dashed line. One end of the first metal part 311 is connected to the first electrode plate 31, and the other end thereof extends to the second part 22 in the direction X.

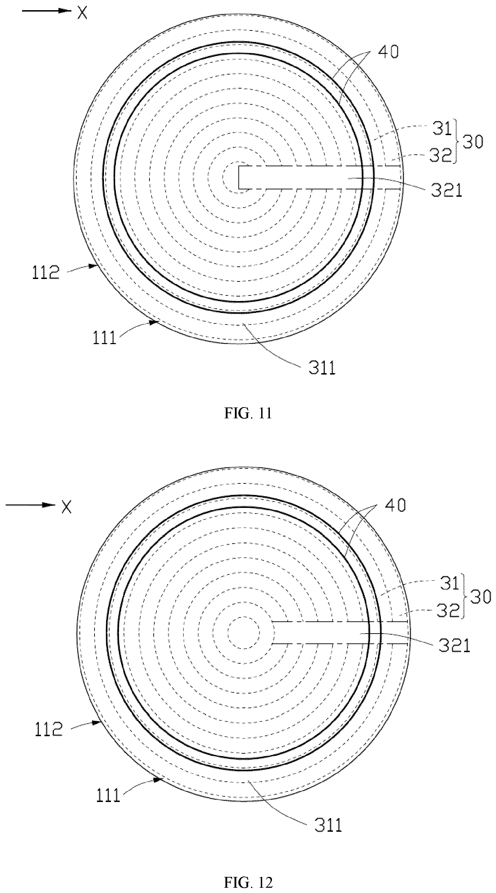

Referring to FIG. 11, FIG. 11 illustrates a connection relationship of a second electrode plate 32, a second metal part 321, and a first conductive part 10 from a direction opposite the direction of the angle of FIG. 2, where observed from a bottom view, the first electrode plate 31 and the second electrode plate 32 are represented by dashed lines, and the second metal part 321 is represented by a chain double dashed line. One end of the second metal part 321 is connected to the second electrode plate 32, and the second metal part 321 is bent and extends and is then connected to the first wall 111 of the first conductive part 10.

Referring to FIG. 12, FIG. 12 illustrates a connection relationship of a second electrode plate 32 and a second metal part 321 from a direction opposite the direction of the angle of FIG. 2, where observed from a bottom view, the first electrode plate 31 and the second electrode plate 32 are represented by dashed lines, and the second metal part 321 is represented by a chain double dashed line. One end of the second metal part 321 is connected to the second electrode plate 32, and the other end thereof extends to the second part 22 in the opposite direction of the direction X.

Referring to FIG. 3, FIG. 4 and FIG. 7, the first layer 40 includes a part disposed between the first conductive part 10 and the second conductive part 20. In addition, the part disposed on the First surfaceA and a surface of the cover part 12 corresponding to the First surfaceA performs sealing between the first conductive part 10 and the second conductive part 20. The first layer 40 including an insulating material isolates the first conductive part 10 from the second conductive part 20, so as to reduce electrical connection between the first conductive part 10 and the second conductive part 20.

In some embodiments, in the Direction Z, the first layer 40 includes a first zone 41 overlapping the second conductive part 20 and a second zone 42 distant from the second conductive part 20. For example, the part of the first layer 40 located between the first conductive part 10 and the second conductive part 20 is the first zone 41, and a zone of the first layer 40 extending outside the first zone 41 in the direction X or the opposite direction of the direction X is the second zone 42. The second zone 42 increases an extension path of the first layer 40 and improves airtightness of the battery 100.

Further, the first layer 40 is disposed away from an outer edge of the cover part 12, that is, the second zone 42 of the first layer 40 is located between the outer edge of the cover part 12 and an outer edge of the first part 21. The "outer edge" herein is an edge position. For example, the outer edge of the cover part 12 is an edge position of a junction of the cover part 12 and the concave part 11, and the outer edge of the first part 21 is an edge position thereof away from an end of the second part 22.

Referring to FIG. 3, the first layer 40 is disposed on the cover part 12 and the First surfaceA of the first part 21. In a second direction, for example, the second direction being the direction X, the first layer 40 is disposed away from the opening part 121, that is, the first layer 40 does not extend to the opening part 121, and a gap exists between the first layer 40 and the second part 22. The first layer 40 is disposed between the first conductive part 10 and the second conductive part 20 to perform sealing in between. Further, the cover part further includes a fifth surface E. The first layer 40 disposed between the First surfaceA and the fifth surface E enhances safety of the battery 100.

Referring to FIG. 4, in the direction X, the first layer 40 extends to the opening part 121 and is connected to the second part 22, and the second part 22 extends to the second side wall 221 of the second part 22. Increasing the extension path of the first layer 40 and increasing the space occupied by the first layer 40 may enhance airtightness of the battery 100, and prevent liquid, for example, water vapor, from entering the battery 100.

In some embodiments, observed in the Direction Z, the first layer 40 surrounds the second part 22. That is, in the Direction Z, an extension distance of the first layer 40 is equal to a distance of the second side wall 221 of the second part 22. This further increases the space occupied by the first layer 40 and the extension distance in the Direction Z, thereby further improving airtightness of the battery 100.

Referring to FIG. 4, in this embodiment, the first layer 40 is disposed away from the electrode assembly 30. With a gap existing between the first layer 40 and the electrode assembly 30, other structures may be disposed in this gap, so as to increase space utilization of the battery 100.

In some embodiments, the first layer 40 is connected to the electrode assembly 30. With the first layer 40 extending toward the electrode assembly 30 until pressing a surface of the electrode assembly 30, the first layer 40 applies pressing force on the electrode assembly 30, and the electrode assembly 30 is more stably disposed in the first conductive part 10.

Referring to FIG. 3 and FIG. 4, in some embodiments, the battery 100 further includes a second layer 50, where the second layer 50 is disposed between the electrode assembly 30 and the cover part 12, and the second layer 50 includes an insulating material. With the cover part 12 including a conductive material, the second layer 50 including the insulating material and disposed between the electrode assembly 30 and a cover plate may mitigate short circuit caused by contact between the electrode assembly 30 and the cover part 12.

Further, the second layer 50 is an insulation pad. It may be understood that in other embodiments, the second layer 50 may also be changed to other structures with equivalent functions or effects. For example, the second layer 50 may alternatively be changed to insulation paint to be spray-applied on the cover part 12 or the electrode assembly 30.

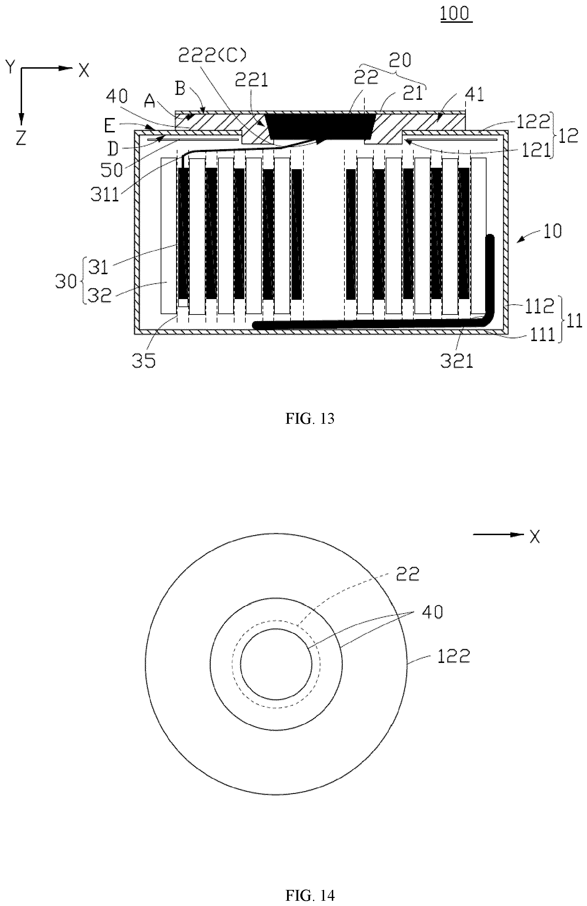

Referring to FIG. 13 and FIG. 14, FIG. 11 is a schematic cross-sectional view of a battery 100 according to a second embodiment, and FIG. 12 is a schematic bottom view of a cover part 12 of a first conductive part 10, a first layer 40, and a second conductive part 20 in FIG. 11 after assembly. The battery 100 in the second embodiment is substantially the same as the battery 100 in the first embodiment in structure except that the second layer 50 is connected to the Third surface C of the second part 22. In the Direction Z, an extension distance of the first layer 40 is greater than a distance of the second side wall 221 of the second part 22, and with the first layer 40 extending in the direction X and the opposite direction of the direction X, the first layer 40 is connected to the Third surface C. For example, the first layer 40 is connected to part of the Third surface C to leave a space, so that the electrode assembly 30 may be connected to the second part 22.

With the first layer 40 connected to the Third surface C, when the battery 100 is placed in a preset environment to be tested, for example, when the battery 100 is fully charged to 4.2 V and placed in a 65°C 90%-humidity environment, the electrode assembly 30 generates vapor, and the vapor pushes the first layer 40 to make the first layer 40 abut against the second conductive part 20, thereby improving arrangement stability of the first layer 40 and airtightness of the battery 100. Voltage of the battery 100 is measured 30 days later to be greater than 4.1 V, which means that performance of the electrode assembly 30 of the battery 100 is well maintained.

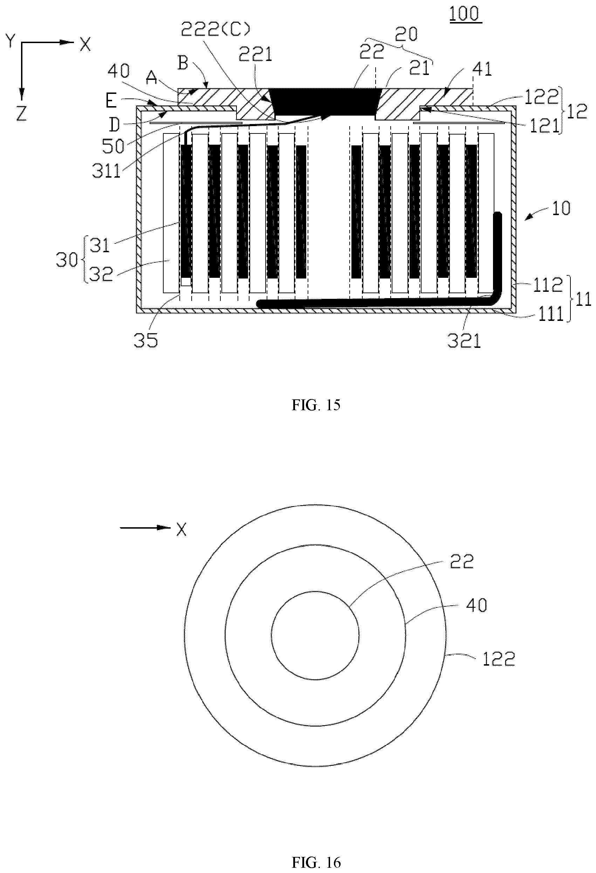

Referring to FIG. 15 and FIG. 16, FIG. 15 is a schematic cross-sectional view of a battery 100 according to a third embodiment, and FIG. 16 is a schematic bottom view of a cover part 12 of a first conductive part 10, a first layer 40, and a second conductive part 20 in FIG. 15 after assembly. The battery 100 in the third embodiment is substantially the same as the battery 100 in the first embodiment in structure except that in the Direction Z, an extension distance of the first layer 40 is greater than a distance of the second side wall 221 of the second part 22, and the first layer 40 is disposed away from the Third surface C and directly faces toward the electrode assembly 30, so as to increase an extension path and space of the first layer 40, thereby improving airtightness of the battery 100.

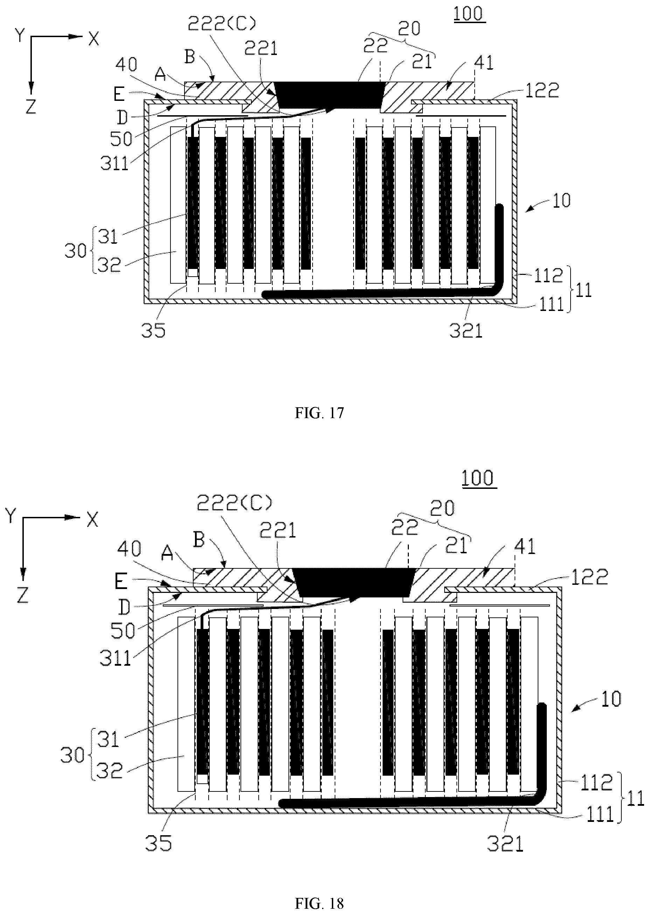

Referring to FIG. 17, FIG. 17 is a schematic cross-sectional view of a battery 100 according to a fourth embodiment. The battery 100 in the fourth embodiment is substantially the same as the battery 100 in the third embodiment in structure except that the first layer 40 extends in the direction X and the opposite direction of the direction X to be connected to the Fourth surface D of the cover part 12.

With the first layer 40 connected to the Fourth surface D, when the battery 100 is placed in a preset environment to be tested, for example, when the battery 100 is fully charged to 4.2 V and placed in a 65°C 90%-humidity environment, the electrode assembly 30 generates vapor, and the vapor pushes the first layer 40 to make the first layer 40 abut against the cover part 12 of the first conductive part 10, thereby improving arrangement stability of the first layer 40 and airtightness of the battery 100. Voltage of the battery 100 is measured 30 days later to be greater than 4.1 V, which means that performance of the electrode assembly 30 of the battery 100 is well maintained.

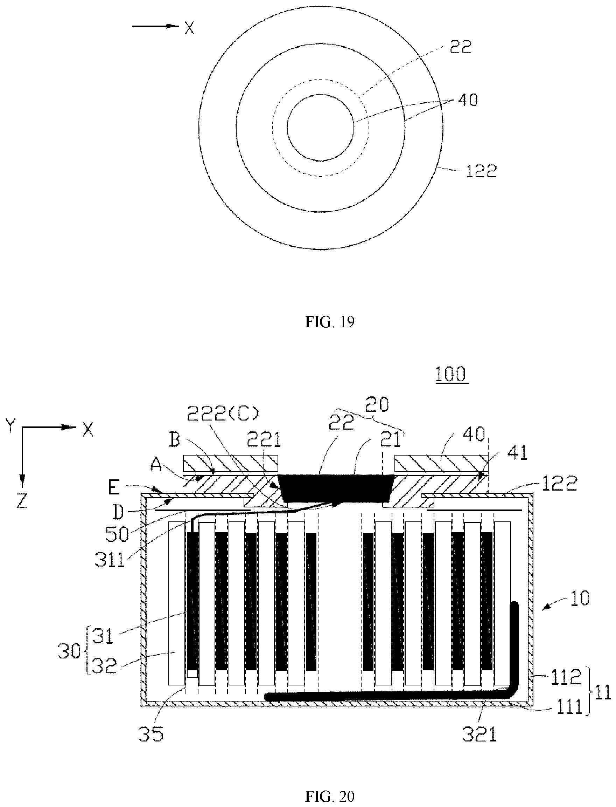

Referring to FIG. 18 and FIG. 19, FIG. 18 is a schematic cross-sectional view of a battery 100 according to a fifth embodiment, and FIG. 19 is a schematic bottom view of a cover part 12 of a first conductive part 10, a first layer 40, and a second conductive part 20 in FIG. 18 after assembly. The battery 100 in the fifth embodiment is substantially the same as the battery 100 in the fourth embodiment in structure except that the first layer 40 is connected to the Third surface C of the second part 22 and the Fourth surface D of the cover part 12.

With the first layer 40 connected to both the Third surface C and the Fourth surface D, when the battery 100 is placed in a preset environment to be tested, for example, when the battery 100 is fully charged to 4.2 V and placed in a 65°C 90%-humidity environment, the electrode assembly 30 generates vapor, and the vapor pushes the first layer 40 to make the first layer 40 abut against the cover part 12 of the first conductive part 10 and the second part 22 of the second conductive part 20, thereby further improving arrangement stability of the first layer 40 and airtightness of the battery 100. Voltage of the battery 100 is measured 30 days later to be greater than 4.1 V, which means that performance of the electrode assembly 30 of the battery 100 is well maintained.

Referring to FIG. 20, FIG. 20 is a schematic cross-sectional view of a battery 100 according to a sixth embodiment. The battery 100 in the sixth embodiment is substantially the same as the battery 100 in the fifth embodiment in structure except that the first layer 40 is disposed on the second part 22 of the second conductive part 20 facing away from the first conductive part 10, the first layer 40 is disposed on the second surface B of the first part 21, and in the Direction Z, the first layer 40 disposed on the second surface B does not overlap the second part 22. The first layer 40 disposed on the two opposite sides of the first part 21 increases stability between the first layer 40 and the first part 21 and improves a sealing effect of the battery 100.

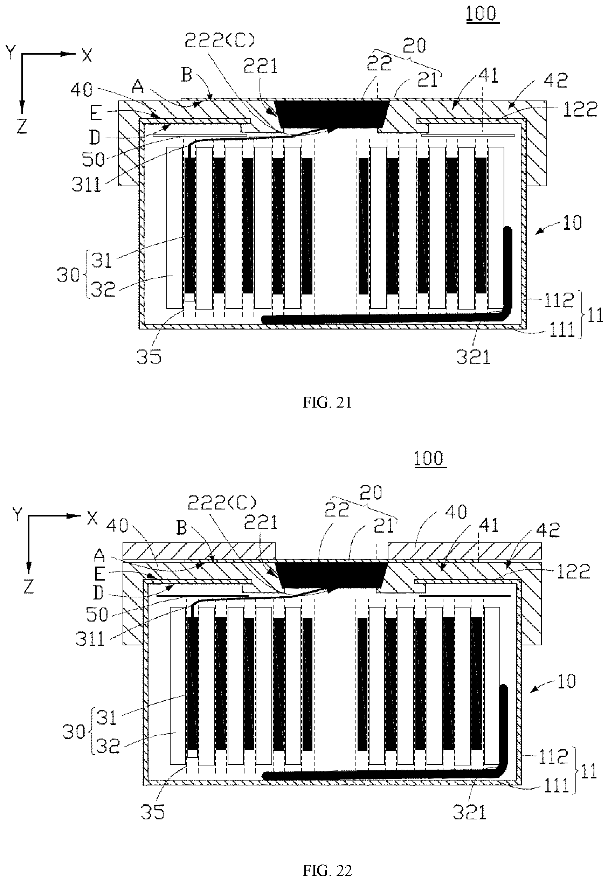

Referring to FIG. 21, FIG. 21 is a schematic cross-sectional view of a battery 100 according to a seventh embodiment. The battery 100 in the seventh embodiment is substantially the same as the battery 100 in the fifth embodiment in structure except that starting from a place between the first conductive part 10 and the second conductive part 20, the first layer 40 extends away from the second part 22 of the second conductive part 20, and extends to an outer side wall of the concave part 11 along a surface of the cover part 12, and the extension part of the first layer 40 is the second zone 42. The outer side wall of the concave part 11 is a surface of the concave part 11 facing away from the electrode assembly 30. Increasing an extension path of the first layer 40 on the first conductive part 10 improves overall airtightness and reduces possibility of liquid flowing into the battery 100.

Referring to FIG. 22, FIG. 22 is a schematic cross-sectional view of a battery 100 according to an eighth embodiment. The battery 100 in the eighth embodiment is substantially the same as the battery 100 in the seventh embodiment in structure except that with the first layer 40 extending to the outer side wall of the first conductive part 10, the first layer 40 is disposed on the first part 21 of the second conductive part 20 facing away from the first conductive part 10, where the first layer 40 extends in the direction X and the opposite direction of the direction X to be flush with the first layer 40 on the outer side wall of the first conductive part 10. In this embodiment, the first layer 40 further improves airtightness of the battery 100.

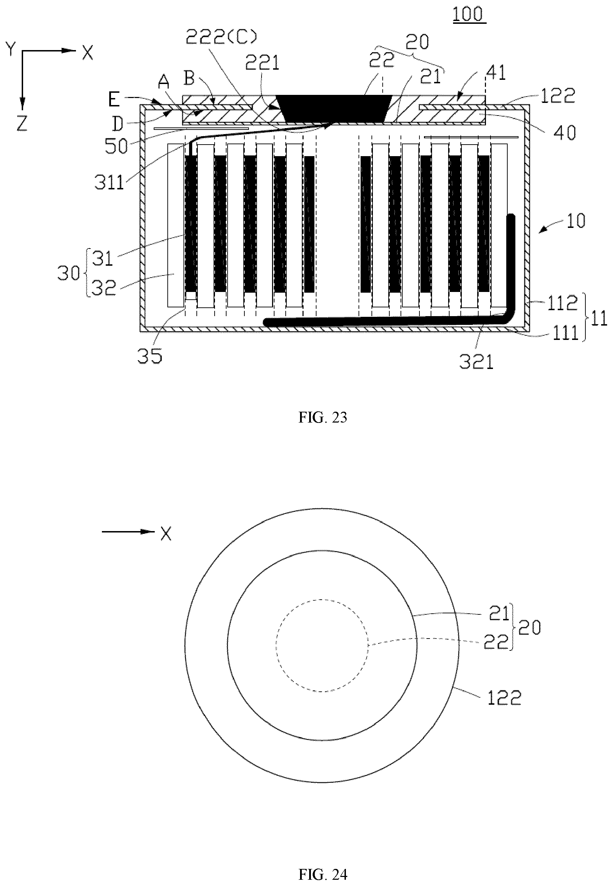

Referring to FIG. 23 and FIG. 24, FIG. 23 is a schematic cross-sectional view of a battery 100 according to a ninth embodiment, and FIG. 24 is a schematic bottom view of a cover part 12 of a first conductive part 10, a first layer 40, and a second conductive part 20 in FIG. 23 after assembly. The battery 100 in the ninth embodiment is substantially the same as the battery 100 in the first embodiment in structure except that the first part 21 of the second conductive part 20 is located in the first conductive part 10. For example, the first part 21 is located between the cover part 12 and the electrode assembly 30. The second part 22 protrudes out of the opening part 121 in a direction leaving the electrode assembly 30, the first layer 40 includes a part located between the cover part 12 and the first part 21, the first layer 40 is also disposed on an outer side wall of the cover part 12, and the first layer 40 is connected to the second side wall 221 of the second part 22. The first metal part 311 is connected to the first part 21, such that the electrode assembly 30 is electrically connected to the second conductive part 20. The outer side wall of the cover part 12 is a surface of the cover part 12 facing away from the electrode assembly 30.

When the battery 100 is placed in a preset environment to be tested, for example, when the battery 100 is fully charged to 4.2 V and placed in a 65°C 90%-humidity environment, the electrode assembly 30 generates vapor, and the vapor pushes the first part 21 to make the first part 21 and the cover part 12 tightly clamp the first layer 40 located in between, thereby improving tightness between the cover part 12, the first layer 40, and the first part 21, thereby improving airtightness of the battery 100.

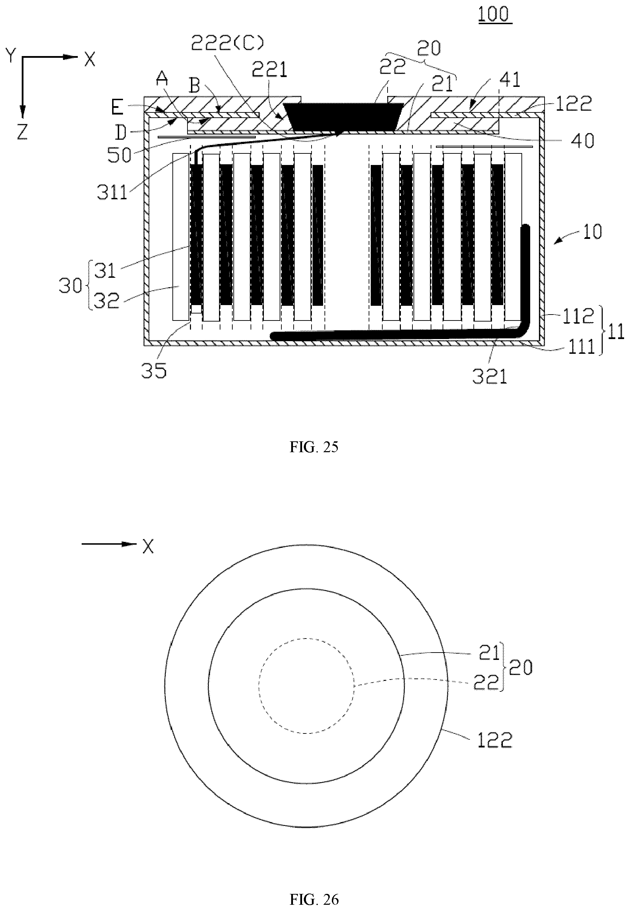

Referring to FIG. 25 and FIG. 26, FIG. 25 is a schematic cross-sectional view of a battery 100 according to a tenth embodiment, and FIG. 26 is a schematic bottom view of a cover part 12 of a first conductive part 10, a first layer 40, and a second conductive part 20 in FIG. 25 after assembly. The battery 100 in the tenth embodiment is substantially the same as the battery 100 in the ninth embodiment in structure except that in an opposite direction of the Direction Z, an extension distance of the first layer 40 located on the outer side wall of the cover part 12 is greater than a distance of the second side wall 221 of the second part 22, and in the direction X and the opposite direction of the direction X, the first layer 40 further extends to be flush with the outer side wall of the concave part 11. With part of the first layer 40 extending to a surface of the second part 22 facing away from the first part 21, the cover part 12 and the first part 21 tightly clamp the first layer 40, and the first layer 40 may also be clamped by two opposite surfaces of the cover part 12, so as to improve airtightness of the battery 100.

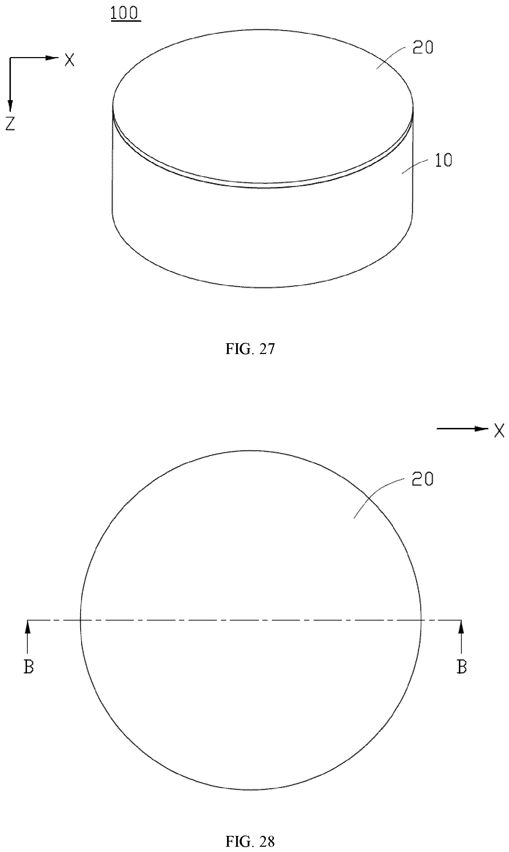

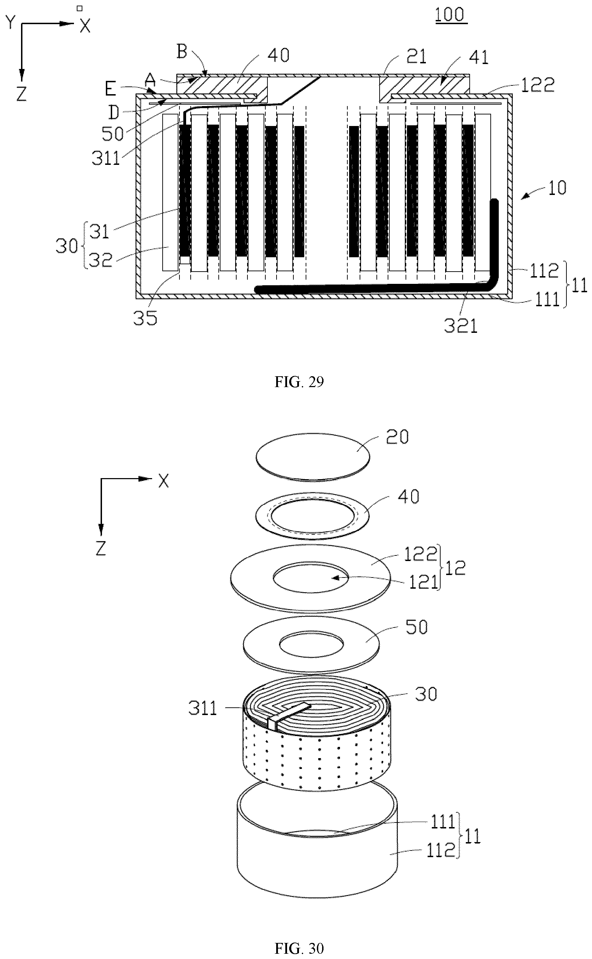

Referring to FIG. 27, FIG. 28 and FIG. 29, FIG. 27 is a schematic three-dimensional structural diagram of a battery 100 according to an eleventh embodiment, FIG. 28 is a schematic top view of the battery 100 shown in FIG. 27, and FIG. 29 is a schematic cross-sectional view of the battery 100 shown in FIG. 28 in a direction B-B. The battery 100 in the eleventh embodiment is substantially the same as the battery 100 in the fourth embodiment in structure except that in the eleventh embodiment, the second conductive part 20 does not include the second part 22 but only includes the first part 21, and the first metal part 311 is electrically connected to the first part 21 through the opening part 121.

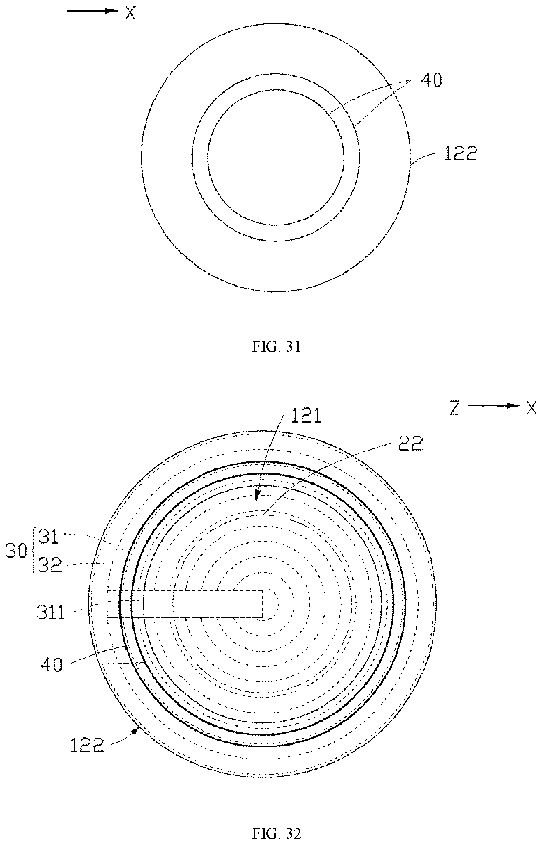

Referring to FIG. 29, FIG. 30 and FIG. 31, FIG. 30 is a schematic exploded view of the battery 100 shown in FIG. 27, where a dashed line in FIG. 30 is a structure of the first layer 40 that cannot be seen from the angle of this exploded view; and FIG. 31 is a schematic bottom view of a cover part 12 of a first conductive part 10, a first layer 40, and a second conductive part 20 in FIG. 30 after assembly. Like the fourth embodiment, with the first layer 40 connected to the Fourth surface D of the cover part 12, the first layer 40 is tightly clamped on the cover part 12, thereby improving stability of connection between the first layer 40 and the first conductive part 10 and preventing the first layer 40 from falling off the first conductive part 10, thereby improving airtightness of the battery 100.

Referring to FIG. 32, FIG. 32 illustrates a connection relationship of a first electrode plate 31, a first metal part 311, and a second conductive part 20 on the basis of the angle of FIG. 28, where the first electrode plate 31 and the second electrode plate 32 are represented by dashed lines, the first metal part 311 is represented by a chain double dashed line, and the first part 21 is represented by a fine line. One end of the first metal part 311 is connected to the first electrode plate 31, and the first metal part 311 is bent and extends and is then connected to the first part 21 of the second conductive part 20.

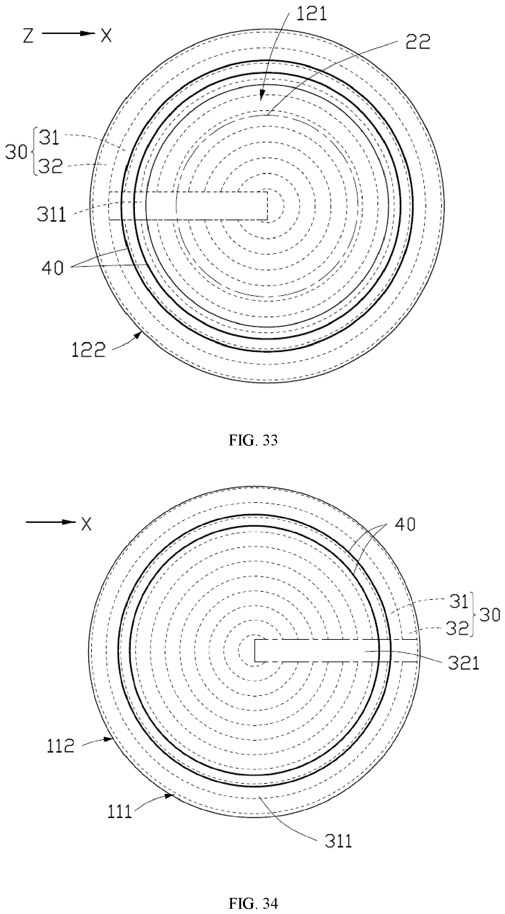

Referring to FIG. 33, FIG. 33 illustrates a connection relationship of a first electrode plate 31 and a first metal part 311 on the basis of the angle of FIG. 26, where the first electrode plate 31 and the second electrode plate 32 are represented by dashed lines, and the first metal part 311 is represented by a chain double dashed line. One end of the first metal part 311 is connected to the first electrode plate 31, and the other end thereof extends to the second part 22 in the direction X.

Referring to FIG. 34, FIG. 34 illustrates a connection relationship of a second electrode plate 32, a second metal part 321, and a first conductive part 10 from a direction opposite the direction of the angle of FIG. 28, where observed from a bottom view, the first electrode plate 31 and the second electrode plate 32 are represented by dashed lines, and the second metal part 321 is represented by a chain double dashed line. One end of the second metal part 321 is connected to the second electrode plate 32, and the second metal part 321 is bent and extends and is then connected to the first wall 111 of the first conductive part 10.

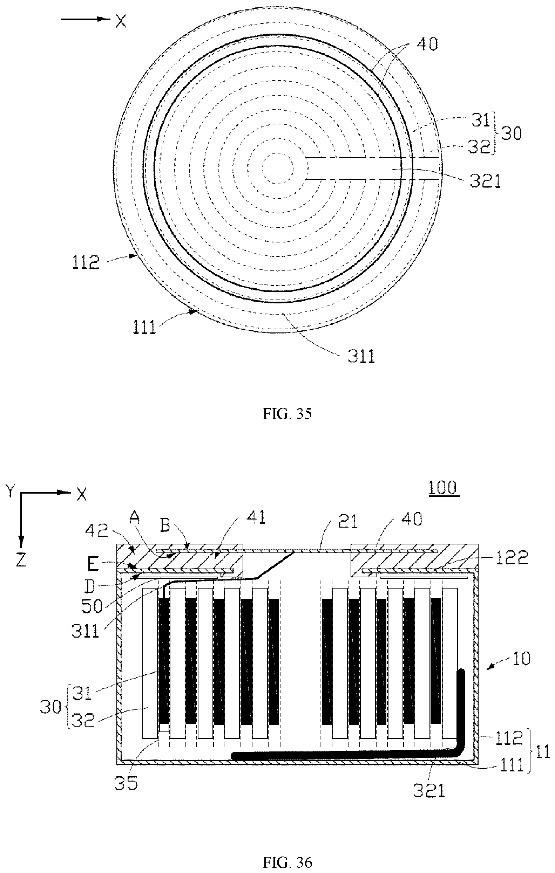

Referring to FIG. 35, FIG. 35 illustrates a connection relationship of a second electrode plate 32 and a second metal part 321 from a direction opposite the direction of the angle of FIG. 28, where observed from a bottom view, the first electrode plate 31 and the second electrode plate 32 are represented by dashed lines, and the second metal part 321 is represented by a chain double dashed line. One end of the second metal part 321 is connected to the second electrode plate 32, and the other end thereof extends to the second part 22 in the opposite direction of the direction X.

Referring to FIG. 36, FIG. 36 is a schematic cross-sectional view of a battery 100 according to a twelfth embodiment. The battery 100 in the twelfth embodiment is substantially the same as the battery 100 in the eleventh embodiment in structure except that the first layer 40 is disposed between the first part 21 and the cover part 12 and is also disposed on a surface of the first part 21 facing away from the cover part 12. The first layer 40 extends in the direction X and the opposite direction of the direction X and extends to be flush with the outer side wall of the concave part 11. The first layer 40 tightly clamped on the cover part 12 improves stability of connection between the first layer 40 and the cover part 12, and also the first layer 40 fixed to the second conductive part 20 improves stability of connection between the electrode assembly 30 and the second conductive part 20, thereby enhancing airtightness of the battery 100 and strength of connection of all the structures of the battery 100.

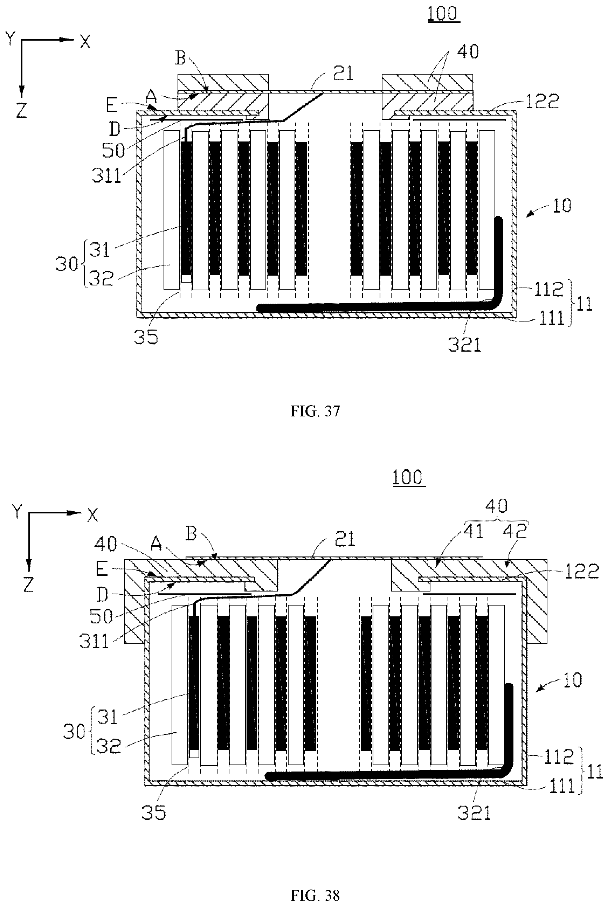

Referring to FIG. 37, FIG. 37 is a schematic cross-sectional view of a battery 100 according to a thirteenth embodiment. The battery 100 in the thirteenth embodiment is substantially the same as the battery 100 in the twelfth embodiment in structure except that the first layer 40 disposed between the first part 21 and the cover part 12 and the first layer 40 disposed on the first part 21 facing away from the cover part 12 extend in the direction X to be flush with an outer edge of the first part 21. The outer edge of the first part 21 is an edge position of the first part 21 away from an opening.

With the first layer 40 tightly clamped on the cover part 12, the battery 100 has some airtightness.

Referring to FIG. 38, FIG. 38 is a schematic cross-sectional view of a battery 100 according to a fourteenth embodiment. The battery 100 in the fourteenth embodiment is substantially the same as the battery 100 in the eleventh embodiment in structure except that starting from a place between the first conductive part 10 and the second conductive part 20, the first layer 40 extends away from the first part 21 of the second conductive part 20, and extends to an outer side wall of the concave part 11 along a surface of the cover part 12. The outer side wall of the concave part 11 is a surface of the concave part 11 facing away from the electrode assembly 30. Increasing an extension path of the first layer 40 on the first conductive part 10 improves overall airtightness and reduces possibility of liquid flowing into the battery 100.

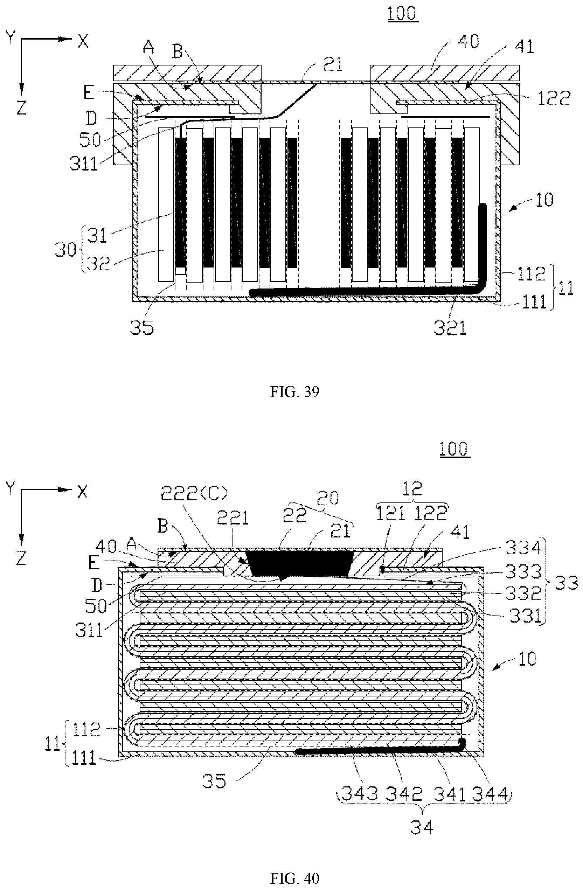

Referring to FIG. 39, FIG. 39 is a schematic cross-sectional view of a battery 100 according to a fifteenth embodiment. The battery 100 in the fifteenth embodiment is substantially the same as the battery 100 in the fourteenth embodiment in structure except that with the first layer 40 extending to the outer side wall of the first conductive part 10, the first layer 40 is disposed on the first part 21 of the second conductive part 20 facing away from the first conductive part 10, where the first layer 40 extends in the direction X and the opposite direction of the direction X to be flush with the first layer 40 on the outer side wall of the first conductive part 10. In this embodiment, the first layer 40 further improves airtightness of the battery 100.

Referring to FIG. 40, FIG. 40 is a schematic cross-sectional view of a battery 100 according to a sixteenth embodiment. The battery 100 in the sixteenth embodiment is substantially the same as the battery 100 in the first embodiment in structure except that the electrode assembly 30 includes a first electrode layer 33, a second electrode layer 34, and a third layer 35. The first electrode layer 33 includes a first current collector 331 and a First active layer 332 formed on the first current collector 331. The second electrode layer 34 includes a second current collector 341 and a second active layer 342 formed on the second current collector 341. The third layer 35 is disposed between the first electrode layer 33 and the second electrode layer 34, and the third layer 35 is insulative. The first electrode layer 33, the second electrode layer 34, and the third layer 35 are wound to form the electrode assembly 30.

The first current collector 331 includes a third zone 333 exposed out of the First active layer 332, where the first conductive part 10 is connected to the first electrode layer 33 through the third zone 333. The second current collector 341 includes a fourth zone 343 exposed out of the second active layer 342, where the second conductive part 20 is connected to the second electrode layer 34 through the fourth zone 343.

The first electrode layer 33 further includes a first metal part 334 connected to the first current collector 331, where the first metal part 334 of the first electrode layer 33 is connected to the second conductive part 20 through the third zone 333. The second electrode layer 34 further includes a second metal part 344 connected to the second current collector 341, where the second metal part 344 of the second electrode layer 34 is connected to the first wall 111 through the fourth zone 343.

In an embodiment, the second metal part 344 of the second electrode layer 34 may alternatively be connected to the first side wall 112 of the first conductive part 10, such that the second electrode layer 34 is electrically connected to the first conductive part 10.

The first electrode layer 33 is equivalent to the first electrode plate 31 in the first embodiment, the second electrode layer 34 is equivalent to the second electrode plate 32 in the first embodiment, and the third layer 35 is a separator used to separate the first electrode layer 33 from the second electrode layer 34 so as to reduce contact between the first electrode layer 33 and the second electrode layer 34.

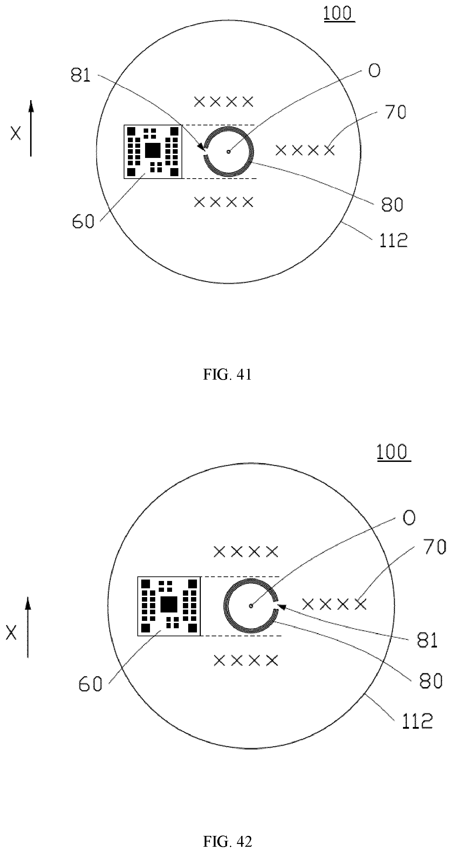

Referring to FIG. 41, FIG. 41 is a schematic bottom view of abattery 100 according to a seventeenth embodiment. The battery 100 in the seventeenth embodiment is substantially the same as the battery 100 in the first embodiment in structure except that in the seventeenth embodiment, a quick response code 60 and a mark 70 are formed at an outer surface of the first wall 111 of the first conductive part 10, where the outer surface of the first wall 111 is a surface of the first wall 111 facing away from the electrode assembly 30.

In some embodiments, the outer surface of the first wall 111 further includes a third part 80, where the third part 80 is generally disposed around a center O position of the first wall 111, and the third part 80 surrounds the center O position of the first wall 111. The quick response code 60 is located on a left side of the third part 80 in Fig 41, and marks 70 are located on an upper end, lower end and right side of the third part 80 in fig 41. Further, the mark 70 is text, for example, the text may be relevant information about the battery 100, such as basic information of the accepted battery 100.

In this embodiment, when the first wall 111 is observed in the opposite direction of the Direction Z, the third part 80 includes an opening 81, where the opening 81 is opposite the quick response code 60. With arrangement of the opening 81, a related worker or automatic machine may more easily recognize a direction of the battery 100. In addition, with the opening 81 opposite the quick response code 60, the opening 81 and the quick response code 60 may be closer, such that the related worker or automatic machine recognizes the quick response code 60 and the opening 81 within a shorter time. In some embodiments, the third part 80 is a metal layer, and the third part 80 using the metal layer may prevent a resistance value from increasing during electrical connection in a case that the first wall 111 of the battery 100 is connected to other wires or the like.

With the quick response code 60 storing information about the battery 100, a user may obtain the information by scanning the quick response code 60, and further, the quick response code 60 may be formed through laser etching. In the direction X, an extension length of the quick response code 60 is greater than a length of the third part 80 in the direction X.

Referring to FIG. 42, FIG. 42 is a schematic bottom view of the battery 100 in FIG. 41 provided with a quick response code 60 and another mark 70. An opening of the third part 80 faces away from the quick response code 60.

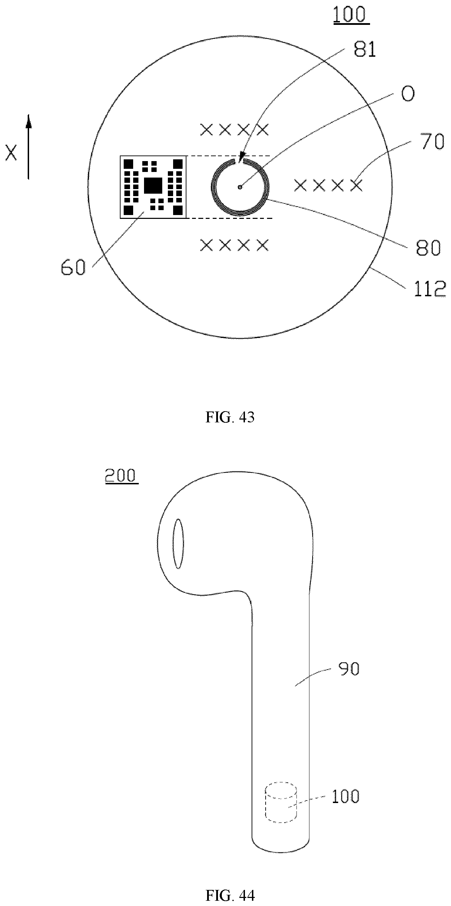

Referring to FIG. 43, FIG. 43 is a schematic bottom view of the battery 100 in FIG. 40 provided with a quick response code 60 and still another mark 70. Here, an opening of the third part 80 faces toward the mark 70 on the upper side in fig 43.

Referring to FIG. 44, FIG. 44 is an eighteenth embodiment of this application. The eighteenth embodiment provides an electronic apparatus 200. The electronic apparatus 200 includes a body 90 and a battery 100 disposed in the body 90, where the battery 100 is the battery 100 in any one of the foregoing embodiments. The electronic apparatus 200 including the battery 100 in any one of the foregoing embodiments has all beneficial effects of the battery 100. Details are not described herein again.

The electronic apparatus 200 may be a mobile terminal or a smart wearable device such as a Bluetooth earphone. It may be understood that in other embodiments, the electronic apparatus 200 is not limited thereto and may also be changed to other structures. With the electronic apparatus 200 being a Bluetooth earphone, the body 90 is an earphone structure.

To sum up, the embodiments of this application provide the battery 100 and the electronic apparatus 200. For the battery 100, the first layer 40 is disposed between the first conductive part 10 and the second conductive part 20 to seal the battery 100. First, increasing a path and occupied space of the first layer 40 may further improve airtightness of the battery 100. Second, with arrangement of the first layer 40, the battery 100 still maintains original volumetric energy density, such that use stability and reliability of the battery 100 are kept.

In addition, those of ordinary skill in the art should be aware of that the foregoing embodiments are only intended to describe this application, but not to limit this application. Appropriate modifications and variations made to the foregoing embodiments without departing from the essential spirit and scope of this application all fall within the scope of this application.

## Claims

1. A battery, **characterized in that** the battery comprising
a first conductive part, comprising a concave part and a cover part, wherein the concave part is connected to the cover part, and the concave part comprises a first wall and a first side wall connected to the first wall;
an electrode assembly, electrically connected to the first conductive part, and located in the concave part;
a second conductive part, electrically connected to the electrode assembly, wherein the second conductive part and the electrode assembly partly overlap viewed from a first direction, the second conductive part is located in the first conductive part viewed from the first direction, the second conductive part comprises a First surfaceand a second surface, and the second surface faces away from the first conductive part, where in the first direction is a direction where the first conductive part and the second conductive part are lined; and
a first layer, comprising a part located between the first conductive part and the second conductive part and connected to the first face, wherein the first layer comprises an insulating material.

2. The battery according to claim 1, **characterized in that** the cover part is provided with an opening part, and the second conductive part comprises a first part and a second part protruding fromhe first part, wherein observed in the first direction, a projection of the second part at least partly overlaps the opening part.

3. The battery according to claim 2, wherein the second part is distant from the opening part viewed from a second direction, wherein the second direction is perpendicular to the first direction.

4. The battery according to claim 2, wherein the first layer is connected to the second part.

5. The battery according to claim 2, wherein the first layer is distant from the second part.

6. The battery according to claim 2, wherein the first layer surrounds the second part viewed from the first direction.

7. The battery according to claim 2, wherein the second part is provided with a Third surface which is distant from the first part, and the first layer is connected to the Third surface.

8. The battery according to claim 2, wherein the second part is provided with a Third surface which is distant from the first part, and the first layer is distant away from the Third surface.

9. The battery according to claim 2, wherein the first part is located outside the concave part.

10. The battery according to claim 4, wherein the cover part comprises a second wall that encloses the opening part, wherein the first layer is connected to the second wall.

11. The battery according to claim 10, wherein the cover part comprises a Fourth surface opposite the first wall and the first layer is connected to the Fourth surface.

12. The battery according to claim 11, wherein the first layer is distant away from the electrode assembly.

13. The battery according to claim 11, wherein the first layer is connected to the electrode assembly.

14. The battery according to claim 1, wherein the cover part comprises a second wall, wherein the cover part is provided with an opening part, the opening part is enclosed by the second wall, and the first layer is connected to the second wall.

15. The battery according to claim 14, wherein the cover part comprises a Fourth surface opposite the first wall, the first layer is connected to the Fourth surface.

16. The battery according to claim 1, wherein the first layer comprises a first zone overlapping the second conductive part viewed from the first direction and a second zone which is distant from the second conductive part.

17. The battery according to claim 1, the battery further comprises a second layer, wherein the second layer comprises an insulating material, and the second layer is disposed between the electrode assembly and the cover part.

18. The battery according to claim 1, wherein the electrode assembly comprises a first electrode plate and a first metal part connected to the first electrode plate and the second conductive part;
the second conductive part and the first metal part comprise a same metal element; and
the first electrode plate is a positive electrode plate, and the same metal element comprises aluminum and/or manganese.

19. The battery according to claim 2, wherein the electrode assembly comprises a first electrode plate and a first metal part connected to the first electrode plate and the second conductive part, wherein the first metal part is connected to the second part.

20. The battery according to claim 1, wherein the electrode assembly comprises a second electrode plate and a second metal part connected to the second electrode plate and the first conductive part;
the first conductive part and the second metal part comprise a same metal element; and
the second electrode plate is a negative electrode plate, and the same metal element comprises at least one of iron, chromium, manganese, nickel, or molybdenum.

21. The battery according to claim 1, wherein the cover part is located outside the concave part.

22. The battery according to claim 1, wherein observed in the first direction, the second conductive part has a projection with an area of A1. and the second conductive part and the cover part have an overlapping projection with an area of A2, where 1/5A1 ≤ A2 ≤ 4/5A1 is satisfied.

23. The battery according to claim 14, wherein the first layer is distant from the opening part viewed from the first direction..

24. The battery according to claim 23, wherein the first layer is distant from an outer edge of the cover part.

25. The battery according to claim 14, wherein the second conductive part comprises a first part and a second part protruding from the first part, wherein the second part is connected to the electrode assembly through the opening part.

26. The battery according to claim 25, wherein the second part comprises a second side wall and a First top surfaceenclosed by the second side wall, wherein the second side wall inclines in the first direction.

27. The battery according to claim 26, wherein an included angle between the second side wall and the First top surfaceis an obtuse angle.

28. The battery according to claim 14, wherein the electrode assembly comprises a first metal part, wherein the first metal part is connected to the second conductive part through the opening part.

29. The battery according to claim 1, wherein the second conductive part comprises a first part and a second part protruding from the first part, and the second part comprises a second side wall and a First top surfaceenclosed by the second side wall, wherein the second side wall inclines in the first direction.

30. The battery according to claim 29, wherein an included angle between the second side wall and the First top surfaceis an obtuse angle.

31. The battery according to claim 14, the battery further comprises a second layer, wherein the second layer comprises an insulating material, and the second layer is disposed between the electrode assembly and the cover part.

32. The battery according to claim 1, the electrode assembly further comprises a second metal part connected to the first wall.

33. The battery according to claim 1, the electrode assembly further comprises a second metal part connected to the first side wall.

34. The battery according to claim 1, wherein the electrode assembly comprises a first electrode layer, a second electrode layer, and a third layer;
the first electrode layer comprises a first current collector and a first active layer formed on the first current collector;
the second electrode layer comprises a second current collector and a second active layer formed on the second current collector; and
the third layer is disposed between the first electrode layer and the second electrode layer, and the third layer is insulative.

35. The battery according to claim 34, wherein the first current collector comprises a third zone exposed from the First active layer, wherein the second conductive part is connected to the first electrode layer through the third zone.

36. The battery according to claim 35, wherein the first electrode layer further comprises a first metal part connected to the first current collector, wherein the second conductive part is connected to the first metal part through the third zone.

37. The battery according to claim 34, wherein the second current collector comprises a fourth zone exposed from the second active layer, and the second electrode layer further comprises a second metal part connected to the second current collector, wherein the second metal part is connected to the first wall through the fourth zone.

38. The battery according to claim 37, wherein the second metal part is connected to the first side wall.

39. An electronic apparatus comprising the battery according to any one of claims 1 to 38.
